(19) **Europäisches Patentamt**
**European Patent Office**
**Office européen des brevets**

(11) **EP 3 770 811 B1**

(12) **EUROPEAN PATENT SPECIFICATION**

(45) Date of publication and mention
of the grant of the patent:
**25.06.2025 Bulletin 2025/26**

(21) Application number: **19187948.5**

(22) Date of filing: **23.07.2019**

(51) International Patent Classification (IPC):
**G06F 18/22** (2023.01)        **G06V 20/40** (2022.01)
**G06V 20/58** (2022.01)        **G06F 18/2323** (2023.01)

(52) Cooperative Patent Classification (CPC):
**G06F 18/2323; G06F 18/22; G06V 20/41;
G06V 20/58**

(54) **ROBUST OBJECT RECOGNITION USING GEOMETRIC TEMPLATE OF OBJECT**

ROBUSTE OBJEKTERKENNUNG MIT GEOMETRISCHER VORLAGE EINES OBJEKTS

RECONNAISSANCE D'OBJET ROBUSTE À L'AIDE D'UN MODÈLE GÉOMÉTRIQUE D'OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.01.2021 Bulletin 2021/04**

(73) Proprietors:
• **Robert Bosch GmbH
70442 Stuttgart (DE)**
• **Max-Planck-Gesellschaft zur Förderung der
Wissenschaften e.V.
80539 München (DE)**

(72) Inventors:
• **DOMOKOS, Csaba
75397 Simmozheim (DE)**
• **ANDRES, Bjoern
69126 Heidelberg (DE)**
• **LEVINKOV, Evgeny
70176 Stuttgart (DE)**
• **GEIGER, Andreas
72827 Wannweil (DE)**

• **KEUPER, Margret
66424 Homburg (DE)**

(74) Representative: **DeltaPatents B.V.
Fellenoord 370
5611 ZL Eindhoven (NL)**

(56) References cited:
• **LEVINKOV EVGENY ET AL: "A Comparative
Study of Local Search Algorithms for Correlation
Clustering", 15 August 2017, INTERNATIONAL
CONFERENCE ON FINANCIAL CRYPTOGRAPHY
AND DATA SECURITY; [LECTURE NOTES IN
COMPUTER SCIENCE; LECT.NOTES
COMPUTER], SPRINGER, BERLIN,
HEIDELBERG, PAGE(S) 103 - 114, ISBN:
978-3-642-17318-9, XP047455690**
• **"Image Processing and Analysis with Graphs :
Theory and Practice", 12 July 2017, CRC PRESS,
ISBN: 978-1-315-21728-4, article MARSHALL F.
TAPPEN: "Image Processing and Analysis with
Graphs. Chapter 16: Modeling Images with
Undirected Graphical Models", pages: 475 - 498,
XP055664437, DOI: 10.1201/b12281-16**

**Description**

**FIELD OF THE INVENTION**

The invention relates to a system and computer-implemented method for object recognition using a geometric template of an object. The invention further relates to a computer-readable medium comprising data representing instructions arranged to cause a processor system to perform the computer-implemented method.

**BACKGROUND OF THE INVENTION**

Object recognition is a key-enabler in various technical application areas, such as autonomous driving in which object recognition may be used to detect and recognize objects in sensor data acquired by one or more sensors integrated into a vehicle. For example, other road users (cars, pedestrians, etc.) or traffic signs may be recognized in the image data acquired by a camera sensor. In some cases, the output of the object recognition may be used to control actuators, such as actuators involved in the steering and/or braking of the vehicle, e.g., to autonomously avoid collisions with other road users.

There are various other uses for object recognition, for example in robotics where it may enable a robot to recognize objects in its environment and act accordingly, but also for enabling character recognition, pose recognition, searching in images, etc.

It is known to use machine learning techniques for object recognition. This typically involves training a learnable model, e.g., a neural network or the like, with a large set of training data which resembles the type of sensor data to which the learnable model is to be applied. Disadvantageously, such training data typically needs to be manually annotated, which may be time consuming and costly. Moreover, if after deployment the characteristics of the sensor data change, for example, due to a different type of camera being used, the machine learnable model may have to be retrained.

The publication "A Comparative Study of Local Search Algorithms for Correlation Clustering" by Levinkov, Evgeny & Kirillov, Alexander & Andres, Bjoern, 2017, pp. 103-114, empirically compares four local search algorithms for correlation clustering by applying these to a variety of instances of the correlation clustering problem for the tasks of image segmentation, hand-written digit classification and social network analysis. For example, it is described to train a Siamese CNN to predict, for any pair of images, whether they depict the same or distinct digits. The probabilities predicted by the Siamese CNN define an instance of the correlation clustering problem for the complete graph whose nodes are the test images. In the empirical comparison, the combination of the use of Greedy Additive Edge Contraction (GAEC) followed by Kernighan-Lin (KL) is described.

**SUMMARY OF THE INVENTION**

It would be desirable to enable object recognition which addresses one or more of the disadvantages of the above-described machine learning based approach.

The following measures address this disadvantage(s) by performing object recognition in a geometric domain based on a geometric template of the object which is to be recognized and based on input data which represents input points and which may in some embodiments be obtained by extracting points of interest from sensor data.

In accordance with a first aspect of the invention, a computer-implemented method and a system are provided for object recognition, as defined by claim 1 and 12, respectively. In accordance with a further aspect of the invention, a computer-readable medium is provided comprising data representing instructions arranged to cause a processor system to perform the computer-implemented method, as defined by claim 11.

Advantageous embodiments are disclosed by the dependent claims.

The above measures provide a computer-implemented method and system for object recognition in a geometric domain. Namely, input data is accessed which comprises input points defined as coordinates in a coordinate system, for example as 3D or 2D coordinates defined in a 3D Euclidean space. Such points may for example be obtained by processing sensor data to extract points of interest from the sensor data. The result may elsewhere be referred to as a 'input point cloud' by resembling a cloud in 3D space. In addition, template data is accessed which comprises a finite number of template points and which are defined as coordinates in the same type of coordinate system. Such template points represent a geometric template of an object, in that each point may represent a geometric point of interest of the object and their relative position may be indicative of an overall geometry of the object. For example, the template points may define points of interest of the exterior of a vehicle, such as its corners. The template points are labelled to distinguish respective parts of the object. Such labelling may, but does not need to represent a semantic labelling. In some embodiments, the labelling may be a contiguous indexing of the template points within the coordinate system, e.g., 1, 2, 3, 4, etc.

The object recognition can then be performed in the geometric domain on the following basis: an undirected weighted graph $G = (V, E)$ is constructed having nodes $V$ representing the input points and edges $E$ in between the nodes. Occurrences or partial occurrences of the object in the input data can now be detected on the basis of the system and method assigning edge labels to the edges $E$ to define cuts in the graph to obtain a decomposition into one or more clusters representing (partial) objects. Such edge labels may represent binary labels either defining a connection, e.g., 1, or a cut, e.g., 0, between a pair of nodes, and may thereby partition the graph into disjoint subsets representing clusters of nodes. Such type of node clustering is known per se from the field of graph theory. In addition, node labels are assigned to the nodes $V$ to identify a respective node as representing a respective part of a respective object. The object recognition may therefore recognize a (partial) object in the input data by forming a cluster of nodes in the graph by edge cuts and labelling the cluster's nodes in accordance with the labels of all or a part of the template points. If the cluster contains all labels of the template points, the object may be detected in the input data in its entirety, and otherwise in part.

The object recognition is thus performed by edge and node labelling, which in turn involves the following. Firstly, a cost function is provided which expresses a scale-invariant similarity between a given triangle in the input points and a given triangle in the geometric template. In other words, the cost function may determine the similarity between a pair of three input points and three template points in a scale-invariant manner. Here, 'scale-invariant' may refer to the similarity measure being invariant to similarity transformations, such as translation, rotation, reflection and scaling. The similarity measure may be defined in various ways, but may in general define a negative contribution to the cost function, in that a maximal similarity may correspond to a local minimum in the cost function. The similarity measure, for a respective pair of triangles, only contribute to the cost function if the labelling of the nodes matches the labelling of the template points and the nodes are part of a same cluster, and otherwise does not contribute (i.e., provides a zero contribution). The similarity measure may thus represent a conditional component of the cost function and may reward an edge and node labelling by which a cluster of nodes is created of which the labels match those of the template points, or at least those of a subset of the template points.

On the basis of the cost function, a first local search algorithm is applied to an initial version of the undirected weighted graph which may be maximally partitioned, in that each edge label may define a cut causing all nodes to be clustered in separate clusters, and in which the nodes are not yet labelled. The first local search algorithm, which may be a so-called greedy algorithm, is used to obtain an initial edge and node labelling which according to the cost function may represent a local minimum, but which is not guaranteed or in fact likely not to represent a global minimum yet which may be considered as an 'initial solution' to the problem of object recognition. In determining the initial edge and node labelling, the first local search algorithm, in an iterative process, connects nodes by edge labelling to form clusters in the graph and label nodes, so as to arrive at the initial solution.

Having obtained the initial edge and node labelling, a second local search algorithm is applied, which seeks to obtain an improvement in the initial local minimum. Compared to the first local search algorithm, the second local search algorithm can iteratively move nodes between clusters by edge re-labelling, instead of only being able to connect nodes, and to relabel nodes. Thereby, the second local search algorithm may arrive at a minimum which typically represents an improvement over the initial solution, or at least arrives at the same solution if no improvement can be achieved. The result may be a partitioned and labelled graph. The assigned edge labels and node labels are then output as object recognition data and thereby represent a result of the object recognition. As will be elucidated elsewhere, the object recognition data may then be used for various purposes, including but not limited to the control of one or more actuators based on the object recognition data.

The above measures enable object recognition based on a geometric template of the object which is to be recognized and based on input data which represents input points and which may in some embodiments be obtained by extracting points of interest from sensor data. Accordingly, the object recognition operates in a geometric domain which may represent an abstraction from sensor data and which thereby may be less dependent on a particular type of sensor data or a particular type of sensor, which may otherwise be the case for machine-learning based object recognition which is directly learned on the sensor data. In particular, by using a scale-invariant similarity measure, the object recognition may be less sensitive to various geometric distortions between input data, including perspective projections. Furthermore, the use of a triangle-based similarity measure allows also partial objects to be detected as also partially detected objects may contribute to a local minimum in the cost function. Such partial detection is highly relevant in real-life applications in which an object is often partially occluded by another object. For example, a car may be partially occluded by a billboard, but it may nevertheless be valuable to detect the car as it may represent an obstacle for an autonomous driving system.

The above measures further specifically establish a two-step approach to object recognition in the geometric domain by applying two different local search algorithms sequentially. This aspect is based on the insight that the performance of local search algorithms which are capable of moving nodes between clusters and thereby have a large degree of exploratory freedom may greatly depend on the initialization, in that a poor initialization (e.g., fully unlabeled and unconnected graph, or randomly labelled edges and nodes) typically provides a (very) poor outcome. Therefore, beforehand, a local search algorithm is applied to the graph which aims at only providing an acceptable initial solution. This 'first' local search algorithm can iteratively connect and label nodes and thereby have a lower degree of exploratory freedom than the second local search algorithm, and thereby may provide an acceptable result even from a fully unlabeled and unconnected graph. Having obtained the initial solution in the form of the initial edge and node labelling, the second local search algorithm then seeks to obtain an improvement in the initial local minimum by exploiting its larger degree of exploratory freedom. Thereby, the two-step approach may overcome the problem of initialization in graph-based object recognition.

Optionally, the cost function ($c_{\lambda_u}$) expresses the similarity between respective triangles as a function of angles defining the triangles. The angles defining a respective triangle have been found to be well-suited to be used in a scale-invariant similarity measure.

Optionally, the method further comprises determining the similarity as the function of the angles defining the triangles by projecting the angles of a respective triangle as a 3D coordinate onto a 2D simplex and by calculating a distance between projected coordinates of the triangles on the 2D simplex.

Given that the angles defining a triangle, they also define a 3D coordinate in a 3D coordinate system, e.g., ($\alpha, \beta, \gamma$) representing the angles $\alpha$, $\beta$ and $\gamma$, the similarity between two triangles may be expressed as a distance between their coordinates in 3D. However, since the 3D coordinates lie on a 2D simplex in the 3D coordinate system and the angles always sum up to 180° degrees a similarity measure may be obtained by determining the distance on the 2D simplex, for example by making use of the Mahalanobis-distance.

Optionally, the second local search algorithm is a Kernighan-Lin (KL) algorithm. The KL algorithm has been found to be well-suited to, on the basis of the given cost function, provide a node and edge labelling in the graph and thereby recognize (partial) objects in the input data. However, the KL algorithm has been found to perform inadequately when it is poorly initialized, and therefore in accordance with the above measures the KL algorithm is preceded by a first local search algorithm providing an initial node and edge labelling which surprisingly greatly improves the overall object recognition.

Optionally, the first local search algorithm is a Greedy Additive Edge Contraction (GAEC) algorithm. The GAEC algorithm has been found to be able to provide an acceptable initialization to the KL-algorithm on the basis of an unlabeled graph.

Optionally, the geometric template data comprises template points representing a compound geometric template of multiple objects, wherein the template points are labelled to distinguish respective parts of respective ones of the multiple objects.

Optionally, the method further comprises accessing sensor data acquired by a sensor and generating the input points by extracting points of interest from the sensor data. Such sensor data may be accessed via a sensor data interface from any type of sensor which provides sensor data from which geometrically-defined points of interest may be extracted. This may include sensors which capture image data, such as camera sensors, but also depth sensors (time of flight, range), lidar sensors, radar sensors and the like.

Optionally, the sensor data is image data acquired by a camera and the method comprises generating the input points by extracting the points of interest as keypoints from the image data. Such keypoints may for example represent corners.

Optionally, the image data is 2D image data and the method comprises generating the input points by extracting the keypoints from the 2D image data and back-projecting said extracted keypoints into a 3D coordinate system based on depth information for the 2D image data. Effectively, by combining the 2D image data with depth information, e.g., as obtained from a stereoscopic camera system or additional depth sensor, 3D keypoints may be reconstructed and used as input to the object recognition.

Optionally, the template points are labelled by contiguous indexing the template points within the coordinate system. For the cost function, it may not be needed to have a sematic labelling, but rather a simple contiguous indexing may suffice to be able to determine whether the labelling of the nodes matches the labelling of the template points.

Optionally, the system further comprises a sensor interface for accessing sensor data acquired by a sensor, wherein the processor subsystem is configured to generate to the input points by extracting points of interest from the sensor data.

Optionally, the system further comprises an actuator interface for providing control data to an actuator, wherein the processor subsystem is configured to generate to the control data to control the actuator based on the object recognition data.

Optionally, a vehicle or robot is provided comprising the system. For example, the vehicle or robot may use the object recognition to recognize objects in its environment.

It will be appreciated by those skilled in the art that two or more of the above-mentioned embodiments, implementations, and/or optional aspects of the invention may be combined in any way deemed useful as long as the resulting combination is within the scope of the invention defined by the appended claims.

Modifications and variations of any system, any computer-implemented method or any computer-readable medium, which correspond to the described modifications and variations of another one of said entities, can be carried out by a person skilled in the art on the basis of the present description within the scope of the invention as defined by the appended claims.

# EP 3 770 811 B1

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a system for object recognition which comprises a sensor interface for receiving sensor data from a sensor in an environment and an actuator interface for controlling an actuator acting in the environment;

Fig. 2 shows the system being integrated into an autonomous vehicle;

Fig. 3A shows an input point cloud representing stars;

Fig. 3B illustrates object recognition being applied to the input points to recognize constellation of stars based on geometric templates defining the constellations;

Fig. 4 shows a computer-implemented method for object recognition; and

Fig. 5 shows a computer-readable medium comprising data.

It should be noted that the figures are purely diagrammatic and not drawn to scale. In the figures, elements which correspond to elements already described may have the same reference numerals.

### List of reference numbers

[0034] The following list of reference numbers is provided for facilitating the interpretation of the drawings and shall not be construed as limiting the claims.

| | |
|---|---|
| 20 | sensor |
| 22 | camera |
| 40 | actuator |
| 42 | electric motor |
| 60 | environment |
| 80 | autonomous vehicle |

| | |
|---|---|
| 100 | system |
| 120 | sensor interface |
| 122 | sensor data |
| 140 | actuator interface |
| 142 | control data |
| 160 | processor subsystem |
| 180 | data storage interface |
| 190 | data storage |
| 192 | template data |
| 194 | input data |
| 196 | object recognition data |

| | |
|---|---|
| 200 | input point cloud representing stars |
| 210 | object representing star constellation (Big Dipper) |

| | |
|---|---|
| 400 | method for object recognition |
| 410 | accessing template data |
| 420 | accessing input data |
| 430 | cost function calculation |
| 440 | Greedy Additive Edge Contraction (GAEC) |
| 450 | Kernighan-Lin (KL) algorithm |
| 460 | output clustering and node labels |

500     computer-readable medium
510     non-transitory data

## DETAILED DESCRIPTION OF EMBODIMENTS

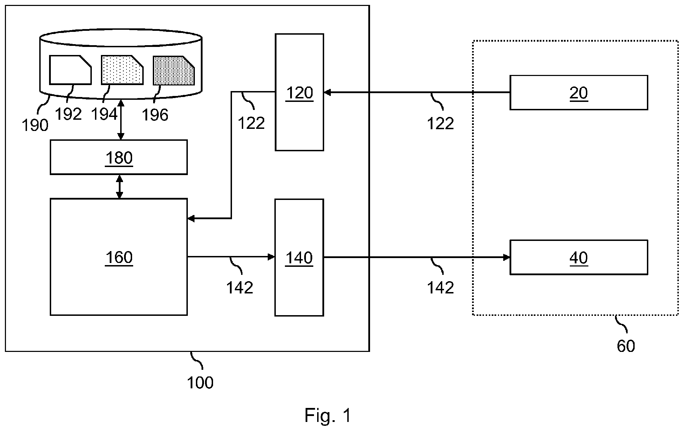

**Fig. 1** shows a system 100 for object recognition. The system 100 comprises an input interface for accessing template data as described elsewhere and for accessing input data for the object recognition. For example, as also illustrated in Fig. 1, the input interface may be constituted by a data storage interface 180 which may access the template data 192 and the input data 194 from a data storage 190. For example, the data storage interface 180 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 190 may be an internal data storage of the system 100, such as a hard drive or SSD, but also an external data storage, e.g., a network-accessible data storage. In some embodiments, the template data 192 and the input data 194 may each be accessed from a different data storage, e.g., via a different subsystem of data storage interface 180. Each subsystem may be of a type as described above for the data storage interface 180.

The template data 192 comprises template points defined as coordinates in a coordinate system and which represent a geometric template of an object. The template points are labelled in the template data to distinguish respective parts of the object. The input data 194 comprises input points defined as coordinates in the coordinate system.

The system 100 further comprises a processor subsystem 160 which is configured to, during operation of the system 100, construct an undirected weighted graph having nodes representing the input points and edges in between the nodes and to perform object recognition by finding one or more occurrences or partial occurrences of the object in the input data on the basis of i) assigning edge labels to the edges to define cuts in the graph to obtain a decomposition into one or more clusters representing objects, and ii) assigning node labels from a set of labels to the nodes to identify a respective node as representing a respective part of a respective object. More specifically, said edge and node labelling which is performed by the processor subsystem 160 comprises j) providing a cost function expressing a scale-invariant similarity between a respective triangle in the nodes and a respective triangle in the template points, wherein the scale-invariant similarity only contributes to the cost function if the labelling of the nodes matches the labelling of the template points and the nodes are part of a same cluster, jj) applying a first local search algorithm to an initial graph having each node unlabeled and each edge labelled to define a cut, wherein the first local search algorithm is configured to search for an initial local minimum in the cost function by iteratively connecting nodes by edge labelling to form clusters in the graph and by iteratively labelling nodes, thereby obtaining obtain an initial edge and node labelling, and jjj) applying a second local search algorithm to the initial edge and node labelling, wherein the second local search algorithm is configured to search for an improvement in initial local minimum of the cost function by iteratively moving nodes between clusters by edge re-labelling and by re-labelling nodes. As a result, the processor subsystem 160 obtains a graph with labels assigned to the nodes and edges.

The system 100 may comprises an output interface for outputting object recognition data which represents said assigned edge labels and said assigned node labels. For example, as also illustrated in Fig. 1, the output interface may be constituted by the data storage interface 180, with said interface being in these embodiments an input/output ('IO') interface, via which the object recognition data 196 may be stored in the data storage 190. Alternatively, the output interface may be separate from the data storage interface 180, but may in general be of a type as described above for the data storage interface 180.

Fig. 1 further shows various optional components of the system 100. For example, in some embodiments, the system 100 may comprise a sensor interface 120 for accessing sensor data 122 acquired by a sensor 20 in an environment 60. In such embodiments, the processor subsystem 160 may be configured to generate to the input points by extracting points of interest from the sensor data. Accordingly, in these embodiments, the sensor interface 120 may represent the input interface as described above. However, in some embodiments, the system 100 may also have a data storage interface 180 to store the acquired sensor data 122 and/or the input data 194 which is derived by the processor subsystem 160 from the sensor data in the data storage 190. In general, the sensor data interface 120 may have any suitable form, including but not limited to a low-level communication interface, e.g., based on I2C or SPI data communication, or a data storage interface of a type as described above for the data storage interface 180.

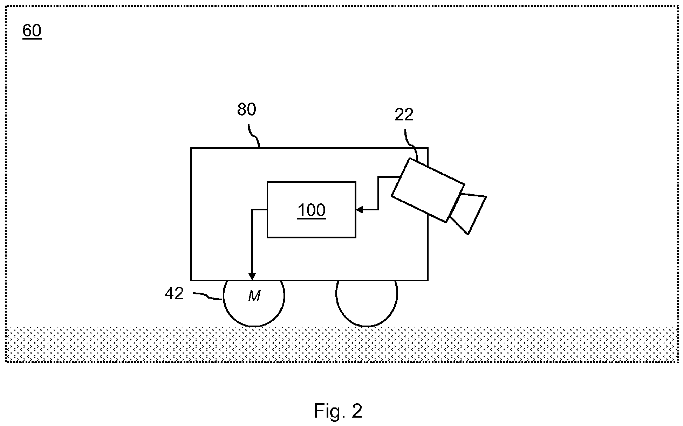

In some embodiments, the system 100 may comprise an actuator interface 140 for providing control data 142 to an actuator 40 in the environment 60. Such control data 142 may be generated by the processor subsystem 160 to control the actuator 40 based on the object recognition data. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 2 for an autonomous vehicle.

In other embodiments (not shown in Fig. 1), the system 100 may comprise an output interface to a rendering device, such as a display, a light source, a loudspeaker, a vibration motor, etc., which may be used to generate a sensory perceptible output signal which may be generated based on the object recognition data, for example to identify a recognized object to a user, or in general to provide any other type of derived sensory perceptible output signal, e.g., for use in guidance, navigation or other type of control.

In general, the system 100 may be embodied as, or in, a single device or apparatus, such as a workstation or a server. The server may be an embedded server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the system may be implemented in the device or apparatus in the form of programmable logic, e.g., as a Field-Programmable Gate Array (FPGA). In general, each functional unit of the system 100 may be implemented in the form of a circuit. The system 100 may also be implemented in a distributed manner, e.g., involving different devices or apparatuses, such as distributed local or cloud-based servers. In some embodiments, the system 100 may be part of vehicle, robot or similar physical entity, and/or may be represent a control system configured to control the physical entity.

**Fig. 2** shows an example of the above, in that the system 100 is shown to be a control system of an autonomous vehicle 80 operating in an environment 60. The autonomous vehicle 80 may incorporate the system 100 to control the steering and the braking of the autonomous vehicle based on sensor data obtained from a video camera 22 integrated into the vehicle 80. For example, the system 100 may control an electric motor 42 to perform (regenerative) braking in case the autonomous vehicle 80 is expected to collide with an obstacle. The obstacle may be recognized by the system 100 in the sensor data by extracting keypoints from the sensor data and by applying object recognition to the extracted keypoints, for example in a manner as described elsewhere in this specification.

The following example describes the geometric object detection in more detail. However, the actual implementation of the geometric object detection may be carried out in various other ways, e.g., on the basis of analogous mathematical concepts.

In general, object detection using a graph-based representation of input points may be considered as a weighted correlation clustering problem with respect to the graph, which is known per se in computer science. The following first considers the formulation of this problem, before considering measure to address this problem.

A higher-order weighted correlation clustering problem with node labels may be formulated rigorously in the form of a binary multi-linear program. Feasible solutions to this problem may define both a clustering and a node labeling of a given graph. An instance of the multi-linear problem may be defined with respect to the following data:

- A graph $G = (V, E)$ whose internal clustering is relevant.
- A finite, non-empty set $L$ called the set of node labels.
- A family $V \in 2^V$ of connected subsets of nodes.
- For any set $U \in V$ in this family and any labeling $\lambda^U: U \to L$ of this set, a $c_{\lambda^U} \in \mathbb{R}$ called a cost that will be payed if and only if all nodes in $U$ are labeled according to $\lambda^U$ and assigned to the same cluster.

A clustering may be identified in the graph with the set of those edges that straddle distinct clusters. These sets of edges are typically called the 'multicuts' of the graph, and have the property that no cycle in the graph intersects with a multicut in precisely one edge. Specifically, a set $X$ of binary labelings $x: E \to \{0,1\}$ of edges with the set $x^{-1}(0)$ of edges labeled '0' may be considered to define a multicut and thus a clustering of the graph. For any edge $\{v, w\} \in E$, $x_{vw} = 0$ may then indicate that the incident nodes v and w are in distinct clusters, or $x_{vw} = 1$ may indicate that v and w are in the same cluster. Formally:

$$X = \{x \in \{0,1\}^E \mid$$

$$\forall C \in cycles(G) \ \forall e \in C: 1 - x_e \leq \sum_{f \in C \setminus \{e\}} (1 - x_f)\} \qquad (1)$$

One may further consider functions $y: V \times L \to \{0,1\}$ that indicate, for any node $v \in V$ and any label $l \in L$, by $y_{vl} = 1$ that the node v is assigned the label $l$, or by $y_{vl} = 0$ that the node v is not assigned the label $l$. In order to ensure that each node is assigned precisely one label, these functions may be constrained to the set:

$$Y = \{y \in \{0,1\}^{V \times L} \mid \forall v \in V: \sum_{l \in L} y_{vl} = 1\} \qquad (2)$$

The instance of the higher order weighted correlation clustering problem with node labels with respect to G, L, V

and *c* may be defined as the binary multi-linear program:

$$\min_{(x,y)\in X\times Y} \sum_{U\in\mathcal{V}} \sum_{\lambda^U\in L^U} c_{\lambda^U} \prod_{\{u,v\}\in\binom{U}{2}\cap E} x_{uv} \prod_{w\in U} y_{w\lambda^U(w)} \qquad (3)$$

Note that the first product assumes the value '1' if all nodes in the set *U* are assigned to the same cluster, and assumes the value '0' otherwise. Note also that the second product assumes the value '1' if the nodes in the set *U* are labeled according to $\lambda^U$, and assumes the value '0' otherwise. Thus, the cost $c_{\lambda_U}$ may be payed if and only if the nodes in the set *U* are labeled according to $\lambda^U$ and assigned to the same cluster.

Local search algorithms may be used to obtain feasible solutions of Eq. (3). In particular, a combination of Greedy Additive Edge Contraction and Kernighan-Lin algorithms may be used, which are generalized to higher-order cost functions and labels as follows.

The problem which is addressed is the problem of object recognition. As input, a geometric template is obtained, which may be represented by *t*: $L \to \mathbb{R}^3$, where $L = \{1, ..., \ell\}$ is a finite index set. The label set $\mathcal{L}$ may be readily defined by the contiguous indexing of the template points. The goal is to find all occurrences of the template in the input point set together with a labeling of the points. It is assumed that the template can undergo a similarity transformation, e.g., translation, rotation, reflection and scaling.

The following defines a model that is robust for similarity transformations. For that purpose, ternary costs are defined over triplets of points, corresponding to triangles, such that for similar triangles the same cost will be assigned, i.e., the cost is scale-invariant. The costs also depend on labels, which identify a corresponding triangle from the template.

Let $\Pi$: $\mathbb{R}^3 \times \mathbb{R}^3 \times \mathbb{R}^3 \to \mathcal{S} \subseteq \mathbb{R}^2$ be a function which projects the coordinates of a triangle to the 2D simplex S:

$$\Pi(A,B,C) \mapsto (\sqrt{2}\,\frac{\sphericalangle CAB}{\pi} + \frac{\sphericalangle ABC}{\pi\sqrt{2}}, \sqrt{\frac{3}{2}}\,\frac{\sphericalangle ABC}{\pi})$$

**The Mahalanobis-distance** $D_\mathrm{M}$: $\mathcal{S} \to \mathbb{R}_0^+, a \mapsto \sqrt{(a-\mu)^\mathsf{T}\Sigma^{-1}(a-\mu)}$ may be used on the simplex $\mathcal{S}$, where $\mu \in \mathcal{S}$ and $\Sigma \in \mathbb{R}^{2\times 2}$ are the mean vector and the covariance matrix, respectively. For all $U = \{u,v,w\} \in \binom{V}{3}$ one may define

$$p_U(\lambda^U) = \exp(-D_\mathrm{M}(\Pi(r_u, r_v, r_w); \mu_{\lambda^U}, \Sigma_{\lambda^U}))\ ,$$

where $\mu_{\lambda_U} = \Pi(t_{\lambda_U}(u), t_{\lambda_{U(v)}}, t_{\lambda_{U(w)}})$ and $\Sigma_{\lambda_U}$ is the covariance matrix of the corresponding triangle from the template. The ternary costs may then be defined as:

$$c_{\lambda^\mathrm{u}} = \begin{cases} -\mathrm{logit}(p_U(\lambda^U)) & \text{if } \lambda^U(u) \neq \lambda^U(v) \neq \lambda^U(w) \neq \lambda^U(u) \\ 0 & \text{else.} \end{cases}$$

It is noted that the model can cope with multiple templates by setting all inter-template costs to $\infty$ such that different labels are assigned to points in different groups.

The following first introduces and then comments on the pseudo-code of respectively 1) the Kernighan-Lin Algorithm, 2) an update function used in the Kernighan-Lin Algorithm, and 3) the Greedy Additive Edge Contraction (GAEC) algorithm.

| **Detailed Pseudo-Code of Kernighan-Lin Algorithm (** KL**)** |
|---|
| **Data:** undirected graph *G* = (*V, E*), label set *L,* a family *V* of connected subsets of nodes, |
| costs *c*, initial $(x^0, y^0) \in X \times Y$ |
| **Result:** 01-labeling $(x,y) \in X \times Y$ |
| 1 $\qquad\qquad\qquad\qquad\qquad\qquad\qquad\qquad\qquad\qquad\quad t \leftarrow 1$ |

(continued)

| 2 | **while** $t \leq max\_iter$ **and** $(y^t \neq y^{t-1}$ **or** $x^t \neq x^{t-1})$ **do** |
|---|---|
| 3 | **foreach** $(A, B) \in$ adjacent_components($x^{t-1}$) **do** |
| 4 | $(x^t, y^t) \leftarrow$ update($G, L, V, c, x^{t-1}, y^{t-1}, A, B$) |
| 5 | **foreach** $A \in$ components($x^t$) **do** |
| 6 | $(x^t, y^t) \leftarrow$ update($G, L, V, c, x^t, y^t, A, \emptyset$) |
| 7 | $t \leftarrow t + 1$ |

The Kernighan-Lin algorithm was originally proposed for the set partitioning problem, while later being adapted for the multicut problem with node labels and to higher order cost function. The variant of the Kernighan-Lin algorithm described in this specification is specifically adapted to the higher-order node labelling multicut problem.

The KL algorithm receives an undirected graph $G = (V, E)$, label set $L$, a family $V$ of connected subsets of nodes, costs c and an initial (feasible) solution $(x^0, y^0)$ and iterates over all possible pairs $(A, B)$ of adjacent (connected) components (i.e., there exists $e = \{v, w\} \in E$ such that v ∈ $A$ and $w \in B$) with respect to the current clustering $x^{t-1}$ (line 3). The algorithm solves a sequence of 2-cut problems between pairs of components (line 4). For each component with respect to the current clustering $x^t$ (line 5), new components can be introduced into the decomposition by solving a 2-cut problem against the empty set (line 6). The procedure may continue either up to a maximum number of iterations or until there is no more difference in the subsequent solutions (line 2). Both lines 4 and 6 rely on the function *update* that operates on a pair of components only and which is described below.

| **Function** update |
|---|
| **Data:** undirected graph $G = (V, E)$, label set $L$, a family $V$ of connected subsets of nodes, costs c, initial $(x,y) \in X \times Y$, a pair of disjoint subsets $A$ and $B$ of nodes |
| **Result:** 01-labeling $(x,y) \in X \times Y$ |
|  |

| 1 | **foreach** $v \in A \cup B$ **do** |
|---|---|
| 2 | **foreach** $l \in L$ **do** |
| 3 | $D_{v,l} \leftarrow$ Eq. (5) |
| 4 | $S_0 \leftarrow 0$ // *cumulative gain* |
| 5 | $M \leftarrow \emptyset$ // *queue of moves* |
| 6 | **for** $i \leftarrow 1$**to** $|A \cup B|$ **do** |
| 7 | $(v^*, l^*) \leftarrow \text{argmax}_{(v,l) \in (A \cup B) \times L} D_{v,l}$ |
| 8 | $S_i \leftarrow S_{i-1} + D_{v^*,l^*}$ |
| 9 | $M.\text{push\_back}(v^*, l^*)$ |
| 10 | **foreach** $U \in \{U' \in 2^{A \cup B} \cap V | v^* \in U' \wedge |U'| \geq 2\}$ **do** |
| 11 | **foreach** $l \in L$ **do** |
| 12 | **if** $|(U \backslash \{v^*\}) \cap A| = |U| - 1$ **then** |
| 13 | **foreach** $u \in (U \backslash \{v^*\}) \cap A$ **do** |
| 14 | $D_{u,l} \leftarrow D_{u,l} - d_{\lambda_U}(u, l)$ // *Eq. (4)* |
| 15 | **else if** $|U \cap B| = |U| - 1$ **then** |
| 16 | **foreach** $w \in U \cap B$ **do** |
| 17 | $D_{w,l} \leftarrow D_{w,l} + d_{\lambda_U}(u, l^*)$ // *Eq. (4)* |
| 18 | **if** $|(U \backslash \{v^*\}) \cap A| = 1$ **then** |
| 19 | $u \leftarrow (U \backslash \{v^*\}) \cap A$ |
| 20 | $D_{u,l} \leftarrow D_{u,l} - d_{\lambda_U}(u, l^*)$ // *Eq. (4)* |

(continued)

| 21 | **else if** $|U \cap B| = 1$ **then** |
| --- | --- |
| 22 | $u \leftarrow U \cap B$ |
| 23 | $D_{u,l} \leftarrow D_{u,l} + d_{\lambda_U}(u, l)$ // Eq. (4) |
| 24 | $i^* \leftarrow \mathrm{argmax}_i S_i$ // find max gain |
| 25 | $\Delta_{join} \leftarrow T_A + T_B - T_{A \cup B}$ // Eq. (6) |
| 26 | **if** $\Delta_{join} > S_{i^*}$ **and** $\Delta_{join} > 0$ **then** |
| 27 | **foreach** $\{u, v\} \in A \cup B_2 \cap E$ **do** |
| 28 | $x_{uv} \leftarrow 1$ |
| 29 | **else** |
| 30 | **for** $i \leftarrow 1$ **to** $i^*$ **do** |
| 31 | $(v, l) \leftarrow M[i]$ |
| 32 | **foreach** $w \in \{w' \in (A \cup B) \setminus \{v\} \mid \{v, w'\} \in E\}$ **do** |
| 33 | $x_e \leftarrow (v \in A \wedge w \in B) \vee (v \in B \wedge w \in A)$ |
| 34 | $y_{vl} \leftarrow 1$ |
| 35 | **foreach** $l' \in L \setminus \{l\}$ **do** |
| 36 | $y_{vl} \leftarrow 0$ |

The above function seeks a lower objective value by updating the 2-way clustering only for two components $A, B \subseteq V, A \cap B = \emptyset$ ($B$ can be the empty set). The algorithm computes the cumulative total gain $S_i$ for all steps $1 \leq i \leq |A \cup B|$. It also maintains a queue $M$ of moves in order to keep the update steps. In each iteration (lines 6-23), it picks a vertex whose move (with possible relabeling) to the other set will result in the largest decrease of objective value (line 7). For efficiency these values may be precomputed (line 3-5) with respect to the current solution $(x,y)$ in line with the Kernighan-Lin algorithm. For any set $U \in V$ and any labeling $\lambda^U$, the notation $d_{\lambda_U}(u, l)$ may define the cost with respect to the current (feasible) solution $(x,y)$, where the label of node $u \in U$ is fixed to $l$, namely,

$$d_{\lambda^U}(u, l) = c_{\lambda^U}[\lambda^U(u) = l] \prod_{u' \in U \setminus \{u\}} y_{u' \lambda^U(u')} ,\qquad (4)$$

where $[\cdot]$ is the Iverson-bracket, that is:

$$[condition] = \begin{cases} 1, & \text{if } condition \text{ is true,} \\ 0, & \text{else.} \end{cases}$$

The sum of the costs for any $A \subseteq V$, any node $v \in V$ and a label $l \in L$ may be defined as

$$I_A(v, l) = \sum_{U \in A_v \cap V} \sum_{\lambda^U \in L^U} d_{\lambda^U}(v, l) ,$$

**where** $A_v = \{A' \cup \{v\} \mid A' \subseteq A\}$. For all $v \in A \cup B$ and $l \in L$ the precomputed values may be calculated as:

$$D_{v,l} = \begin{cases} I_A(v, l) - I_B(v, l), & \text{if } v \in A \\ I_B(v, l) - I_A(v, l), & \text{if } v \in B \end{cases} \qquad (5)$$

In the main loop (lines 6-23) the algorithm picks a vertex $v^*$ to move potentially and its new (possibly the same) label (line 7), computes the actual cumulative gain (line 8) and records this move (line 9) and then updates precomputed values of $D_{vl}$ of all other vertices that share a cost with v* (lines 10-23). There are different cases captured by lines 12-23; without loss of generality, it is assumed that v* is moved from $A$ to $B$. Note that only a single node is considered to be moved in each iteration. Note that this way sub-optimal (i.e., non-decreasing) individual moves may be allowed in the hope to leave a local minimum and arrive at a better one later. We search for the step $i^*$ resulting in the maximum cumulative gain (line 24). A special operation computes the decrease of the objective of joining two components $A$ and $B$ (line 25) keeping their node labels *y* unchanged as follows:

$$\Delta_{join} = T_A + T_B - T_{A \cup B} \ , \tag{6}$$

where for any $A \subseteq V$

$$T_A = \sum_{U \in 2^A \cap \mathcal{V}} \sum_{\lambda^U \in L^U} c_{\lambda^U} \prod_{w \in U} y_{w\lambda^U(w)} \tag{7}$$

This is relevant as individual local moves may not result in joining *A* and *B* even if it is beneficial. The optimal operation is chosen (line 26): either join the two components *A* and *B* (lines 27-28) or keep some moves up to *i\** (lines 30-36). Both the clustering (lines 32-33) and the labeling (lines 34-36) are then updated.

| | |
|---|---|
| **Function** Greedy Additive Edge Contraction (GAEC) | |
| **Data:** undirected graph *G* = (*V, E)*, label set *L,* a family *V* of connected subsets of nodes, costs *c* | |
| **Result: 01-labeling** (*x,y*) $\in$ *X* $\times$ *Y* | |
| | |
| 1 | $x \leftarrow 0^{V \times L}$ |
| 2 | $y \leftarrow 0^E$ |
| 3 | **foreach** $U \in \{U' \in V \| U' \| \geq 2\}$ **do** |
| 4 | $\lambda^U \leftarrow argmin_{\lambda_U \in LU} C_U(\lambda^U) = argmin_{\lambda_U \in L_U} \sum_{A \subseteq U \cap V} c_{\lambda_A} \prod_{u \in A}[\lambda^A(u) = \lambda^U(u)]$ |
| 5 | $Q. push((U, \lambda^U), C_U(\lambda^U))$ |
| 6 | **while** $\|Q\| \neq 0$ **and** $Q.top() < 0$ **do** |
| 7 | $(U, \lambda^U) \leftarrow Q.pop()$ |
| 8 | $u \leftarrow$ any_element(*U*) |
| 9 | **if** $\sum_{l \in L} y_{ul} = 0$ **then** |
| 10 | $y_{u,\lambda_U(u)} \leftarrow 1$ |
| 11 | **foreach** $r \in U \backslash \{u\}$ **do** |
| 12 | **if** $\sum_{l \in L} y_{rl} = 0$ **then** |
| 13 | $y_{r,\lambda_U(r)} \leftarrow 1$ |
| 14 | **foreach** $W \in 2^{U \backslash \{u,r\}} \cap V$ **do** |
| 15 | **foreach** $\lambda^W \in \{\times_{w' \in W} L_{w'} \| L_{w'} = \{argmax_l y_{w'l}\}$ if $\sum_{l \in L} y_{w'l} = 1$, else $L_{w'} = L\}$ **do** |
| 16 | $c_{\lambda_W} \leftarrow c_{\lambda_W} + \sum_{A \subseteq W_r \cap V} c_{\lambda_A} \prod_{w \in A} [\lambda^A(w) = \lambda^W(w)]$ |
| | 17 $\Delta \leftarrow \sum_{A \subseteq W_u \cap V} c_{\lambda_A} \prod_{w \in A} [\lambda^A(w) = \lambda^W(w)]$ |
| 18 | **foreach** $w \in W$ **do** |
| 19 | **if** $\sum_{l \in L} y_{wl} = 0$ **then** |
| 20 | $\Delta \leftarrow \Delta + c_{\lambda_w}$ |
| 21 | **if** $\Delta < 0$ **then** |
| 22 | $Q. push((W, \lambda^W), \Delta)$ |
| 23 | $V \leftarrow V \backslash \{r\}$ |
| 24 | **foreach** $v \in V$ **do** |
| 25 | **if** $\sum_{l \in L} y_{vl} = 0$ **then** |
| 26 | $\lambda^{u*} \leftarrow argmin_{\lambda_u \in L} c_{\lambda_u}$ |
| 27 | $y_{u,\lambda_{u*}(u)} \leftarrow 1$ |

The GAEC algorithm starts with an initial decomposition of all vertices $v \in V$ into individual components (line 1). Initially all nodes are unlabeled (line 2). The algorithm greedily contracts a pair or a triplet of vertices, while fixing their node labels. The remaining costs, which the contracted vertices were part of, are added up. A min-priority queue $Q$ is used to keep track of the most prospective subset of vertices to contract. We initialize $Q$ by finding the best cost (including node labels) for each pair and triplet of vertices (lines 3-5). The main loop goes until the queue is empty or does not contain any negative-cost elements (line 6). In each iteration the best subset $U$ and its labeling $\lambda^U$ (line 7) may be picked. Without loss of generality, we assume that a node $u$ of $U$ remains in the graph (lines 8-10), while other vertices in $U\backslash\{u\}$ are contracted with it (lines 11-24). Lines 15-23 update all costs, while line 16 handles collapse of cost. The new prospective improvements in the objective value are pushed into the queue $Q$. In the end, the vertices that have not been assigned a node label assume the cheapest one (lines 25-28), based on unary costs, which may be defined as $c_{\lambda_u}$ where $u$ stands for a single node, and remain in individual clusters.

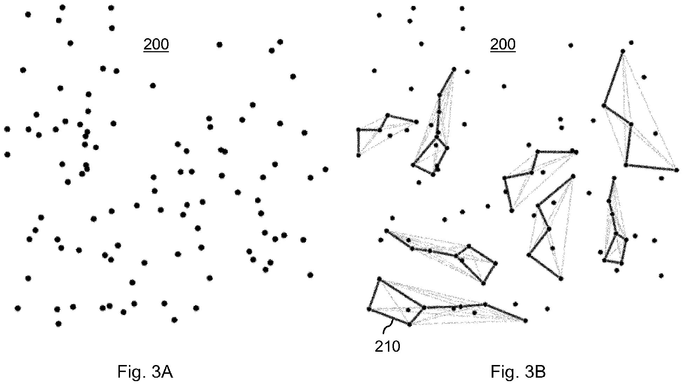

**Fig. 3A** shows an input point cloud 200 representing stars. In particular, the input points 200 represent four 'Big Dippers' and four Cassiopeia star constellations and 52 outliers. In general, such input points 200 may be defined as 2D coordinates in a Euclidian coordinate system, and may be obtained by the system and method directly as 2D coordinates or by detecting stars in an image of the night sky.

**Fig. 3B** illustrates object recognition being applied to the input points 200 to recognize constellation of stars based on geometric templates defining the constellations. In the example of Fig. 3B, various star constellations 210 are recognized as clusters of points with the points of each cluster being mutually connected by edges in the corresponding graph. Such edge connections are shown in Fig. 3B by the thin lines, while the outline of the constellations according to the obtained labelling are shown as thick lines.

In another embodiment, keypoints may be detected by one or more keypoint detectors in image data acquired by an onboard camera of a vehicle. For example, corners or corner-like points may be detected as keypoints. Such keypoints may be converted to input data for the geometric object recognition by back-projecting the extracted keypoints into a 3D coordinate system based on depth information for the image data, which may be obtained from for example a stereoscopic camera system or an additional depth sensor or which may be estimated. Geometric object detection may then be applied to the points based on a geometric template of a car, resulting in inferred keypoints. Such car recognition may involve obtaining CAD models of various car types. The input points in 3D Euclidian space may be obtained by back-projecting extracted keypoints from a 2D digital image into a 3D coordinate system by making use of the camera matrix and estimated or measured depth information. The object recognition may then effectively search for the CAD models in the input point cloud while using a scale-invariant similarity measure under the assumption that similarity transformations may have occurred. A possible application area is in driver assistance systems which operate when a vehicle is travelling on a highway. Here, the direction of cars has a relatively low variance, but the scaling of the cars varies substantially during operation due to the different distances of the cars to the camera.

The above-described object recognition in the geometric domain may also be applied to various other application areas, for example, to articulated object detection. Here, a graph $G = (V, E)$ with an arbitrary structure E may be used to model compound objects composed of rigid parts that can move around junction points. This movement may be modeled as a piecewise rigid transformation. An example of an articulated object is a moving robot arm. The geometry of the robot arm is known, and therefore the geometric template is readily available. By making use of markers on the junctions, input points may be obtained in the form of the position of the markers. The exact pose of the robot arm may be determined through the geometric object recognition even for partially occluded parts. This application may be incorporated into safety systems, where dangerous situations need to be recognized. For marker extraction, one may use IR or UV cameras in order to increase the robustness of the system depending on the given conditions. A similar application area is the inspection of parts (e.g., piston, valves) which may use the geometric object recognition.

Another example of an application area is traffic sign recognition. Here, planar geometric data or image data may be obtained which defines various traffic signs. In order to model the traffic signs from such type of data, one or several types of points of interest, such as corners, may be extracted from the data. The input point cloud may be obtained from sensor data, such as the image data acquired by an onboard camera of a vehicle, by extracting the same type of points of interest from the sensor data.

Yet another example of an application area is character recognition. Here, planar geometric data or image data may be obtained which defines a finite set of characters and thereby a set of 2D objects. In order to model the characters from such type of data, one or several types of points of interest, such as corners, may be extracted from the data. The input point cloud may be obtained from sensor data, such as the image data of a document page acquired by a scanner or digital camera, by extracting the same type of points of interest from the sensor data. In case of a digital camera, if the camera's direction is not perpendicular to the plane of the document page, the transformation is a perspective projection, which may be accounted for by the scale-invariant similarity measure.

Yet another example of an application area is detecting and identifying small objects with a known geometry. This may for example be relevant for a robot which may be configured to find and grab the objects. Such a robot may also be configured to count objects. By being able to recognize the objects, the counting of the objects is trivial.

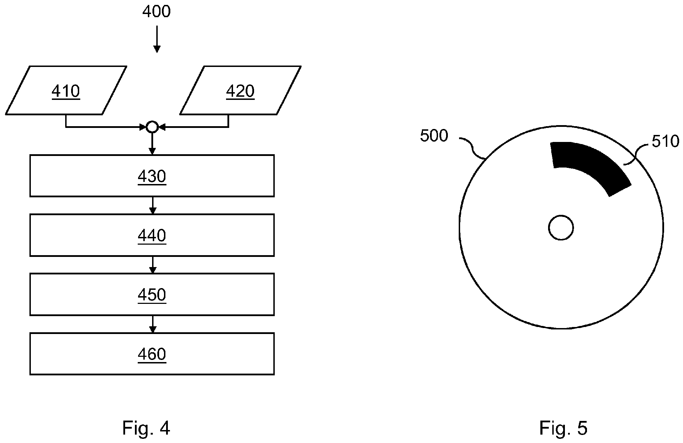

**Fig. 4** shows a computer-implemented method 400 for object recognition, being a high-level representation of some embodiments described in this specification. The method 400 comprises in a step titled "ACCESSING TEMPLATE DATA", accessing 410 template data representing a geometric template, in a step titled "ACCESSING INPUT DATA", accessing 420 input data for the object recognition, in a step titled "PROVIDING COST FUNCTION", providing 430 a cost function, in a step titled "GREEDY ADDITIVE EDGE CONTRACTION (GAEC)", performing 440 a Greedy Additive Edge Contraction (GAEC), in a step titled "KERNIGHAN-LIN (KL) ALGORITHM", executing 450 a Kernighan-Lin (KL) algorithm, and in a step titled "OUTPUT CLUSTERING AND NODE LABELS", outputting 460 object recognition data representing a clustering and labelling of nodes.

This method 400 and any other method, algorithm or pseudo-code described in this specification may be implemented on a computer as a computer implemented method, as dedicated hardware, or as a combination of both. As also illustrated in **Fig. 5**, instructions for the computer, e.g., executable code, may be stored on a computer readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 5 shows an optical disc 500.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method (400) for object recognition, comprising:

   - accessing (410) template data comprising template points defined as coordinates in a coordinate system, wherein the template points represent a geometric template of an object, wherein the template points are labelled to distinguish respective parts of the object;
   - accessing (420) input data for the object recognition, the input data comprising input points (200) defined as coordinates in the coordinate system;
   - constructing an undirected weighted graph having nodes representing the input points and edges in between the nodes;
   - performing object recognition by finding one or more occurrences or partial occurrences of the object (210) in the input data on the basis of:

     - assigning edge labels to the edges to define cuts in the graph to obtain a decomposition into one or more clusters representing objects, and
     - assigning node labels from a set of labels to the nodes to identify a respective node as representing a respective part of a respective object,

   wherein said edge and node labelling comprises:

     - providing (430) a cost function expressing a scale-invariant similarity between a respective triangle in the nodes and a respective triangle in the template points, wherein the scale-invariant similarity contributes to the cost function if the labelling of the nodes matches the labelling of the template points and the nodes are part of a same cluster;
     - applying (440) a first local search algorithm to an initial graph having each node unlabeled and each edge labelled to define a cut, wherein the first local search algorithm is configured to search for an initial local minimum in the cost function by iteratively connecting nodes by edge labelling to form clusters in the graph and by iteratively labelling nodes, thereby obtaining obtain an initial edge and node labelling;
- applying (450) a second local search algorithm to the initial edge and node labelling, wherein the second local search algorithm is configured to search for an improvement in the initial local minimum of the cost function by iteratively moving nodes between clusters by edge re-labelling and by re-labelling nodes;

- generating (460) object recognition data as output, the object recognition data representing said assigned edge labels and said assigned node labels.

2. The computer-implemented method (400) according to claim 1, wherein the cost function expresses the similarity between respective triangles as a function of angles defining the triangles.

3. The computer-implemented method (400) according to claim 2, further comprising determining the similarity as the function of the angles defining the triangles by projecting the angles of a respective triangle as a 3D coordinate onto a 2D simplex and by calculating a distance between projected coordinates of the triangles on the 2D simplex.

4. The computer-implemented method (400) according to any one of claims 1 to 3, wherein the first local search algorithm is a Greedy Additive Edge Contraction algorithm.

5. The computer-implemented method (400) according to any one of claims 1 to 4, wherein the second local search algorithm is a Kernighan-Lin algorithm.

6. The computer-implemented method (400) according to any one of claims 1 to 5, wherein the geometric template data comprises template points representing a compound geometric template of multiple objects, wherein the template points are labelled to distinguish respective parts of respective ones of the multiple objects.

7. The computer-implemented method (400) according to any one of claims 1 to 6, further comprising accessing sensor data acquired by a sensor and generating the input points by extracting points of interest from the sensor data.

8. The computer-implemented method (400) according to claim 7, wherein the sensor data is image data acquired by a camera and the method comprises generating the input points by extracting the points of interest as keypoints from the image data.

9. The computer-implemented method (400) according to claim 8, wherein the image data is 2D image data and the method comprises generating the input points by extracting the keypoints from the 2D image data and back-projecting said extracted keypoints into a 3D coordinate system based on depth information for the 2D image data.

10. The computer-implemented method (400) according to any one of claims 1 to 9, wherein the template points are labelled by contiguous indexing the template points within the coordinate system.

11. A computer-readable medium (500) comprising transitory or non-transitory data (510) representing instructions arranged to cause a processor system to perform the computer-implemented method according to any one of claims 1 to 10.

12. A system (100) for object recognition, comprising:

- an input interface (180) configured to:

access template data (192) comprising template points defined as coordinates in a coordinate system, wherein the template points represent a geometric template of an object, wherein the template points are labelled to distinguish respective parts of the object;
access input data (194) for the object recognition, the input data comprising input points defined as coordinates in the coordinate system;

- a processor subsystem (160) configured to:

construct an undirected weighted graph having nodes representing the input points and edges in between the nodes;

perform object recognition by finding one or more occurrences or partial occurrences of the object in the input data on the basis of:

- assigning edge labels to the edges to define cuts in the graph to obtain a decomposition into one or more clusters representing objects, and
- assigning node labels from a set of labels to the nodes to identify a respective node as representing a respective part of a respective object,

wherein said edge and node labelling comprises:

- providing a cost function expressing a scale-invariant similarity between a respective triangle in the nodes and a respective triangle in the template points, wherein the scale-invariant similarity contributes to the cost function if the labelling of the nodes matches the labelling of the template points and the nodes are part of a same cluster;
- applying a first local search algorithm to an initial graph having each node unlabeled and each edge labelled to define a cut, wherein the first local search algorithm is configured to search for an initial local minimum in the cost function by iteratively connecting nodes by edge labelling to form clusters in the graph and by iteratively labelling nodes, thereby obtaining obtain an initial edge and node labelling;
- applying a second local search algorithm to the initial edge and node labelling, wherein the second local search algorithm is configured to search for an improvement in initial local minimum of the cost function by iteratively moving nodes between clusters by edge re-labelling and by re-labelling nodes;

- an output interface (180) for outputting object recognition data (196), the object recognition data representing said assigned edge labels and said assigned node labels.

13. The system (100) according to claim 12, further comprising a sensor interface (120) for accessing sensor data (122) acquired by a sensor (20), wherein the processor subsystem (160) is configured to generate to the input points by extracting points of interest from the sensor data.

14. The system (100) according to claim 12 or 13, further comprising an actuator interface (140) for providing control data (142) to an actuator (40), wherein the processor subsystem (160) is configured to generate to the control data to control the actuator based on the object recognition data.

15. A vehicle (80) or robot comprising the system (100) according to any one of claims 12 to 13.

**Patentansprüche**

1. Ein computerimplementiertes Verfahren (400) zur Objekterkennung, umfassend:

- Zugreifen (410) auf Vorlagendaten, die Vorlagenpunkte umfassen, die als Koordinaten in einem Koordinatensystem definiert sind, wobei die Vorlagenpunkte eine geometrische Vorlage eines Objekts darstellen, wobei die Vorlagenpunkte beschriftet sind, um jeweilige Teile des Objekts zu unterscheiden;
- Zugreifen (420) auf Eingabedaten für die Objekterkennung, wobei die Eingabedaten Eingabepunkte (200) umfassen, die als Koordinaten im Koordinatensystem definiert sind;
- Konstruieren eines ungerichteten gewichteten Graphen, der Knoten, die die Eingabepunkte darstellen, und Kanten zwischen den Knoten aufweist;
- Durchführen von Objekterkennung durch Finden eines oder mehrerer Vorkommen oder teilweiser Vorkommen des Objekts (210) in den Eingabedaten auf Basis von:

- Zuweisen von Kantenbeschriftungen zu den Kanten, um Schnitte im Graphen zu definieren, um eine Zerlegung in einen oder mehrere Cluster zu erhalten, die Objekte darstellen, und
- Zuweisen von Knotenbeschriftungen aus einem Satz Beschriftungen zu den Knoten, um einen jeweiligen Knoten als einen jeweiligen Teil eines jeweiligen Objekts darstellend zu identifizieren,

wobei die Kanten- und Knotenbeschriftung umfasst:

- Bereitstellen (430) einer Kostenfunktion, die eine skaleninvariante Ähnlichkeit zwischen einem jeweiligen Dreieck in den Knoten und einem jeweiligen Dreieck in den Vorlagenpunkten ausdrückt, wobei die skaleninvariante Ähnlichkeit zur Kostenfunktion beiträgt, wenn die Beschriftung der Knoten mit der Beschriftung der Vorlagenpunkte übereinstimmt und die Knoten Teil desselben Clusters sind;

- Anwenden (440) eines ersten lokalen Suchalgorithmus auf einen anfänglichen Graphen, der jeden Knoten unbeschriftet und jede Kante beschriftet aufweist, um einen Schnitt zu definieren, wobei der erste lokale Suchalgorithmus so konfiguriert ist, dass er durch iteratives Verbinden von Knoten durch Kantenbeschriftung, um Cluster im Graphen zu bilden, und durch iterative Beschriftung von Knoten, wodurch eine anfängliche Kanten- und Knotenbeschriftung erhalten wird, nach einem anfänglichen lokalen Minimum der Kostenfunktion sucht;

- Anwenden (450) eines zweiten lokalen Suchalgorithmus auf die anfängliche Kanten- und Knotenbeschriftung, wobei der zweite lokale Suchalgorithmus so konfiguriert ist, dass er durch iteratives Verschieben von Knoten zwischen Clustern durch Umbeschriftung von Kanten und durch Umbeschriftung von Knoten nach einer Verbesserung des anfänglichen lokalen Minimums der Kostenfunktion sucht;

- Erzeugen (460) von Objekterkennungsdaten als Ausgabe, wobei die Objekterkennungsdaten die zugewiesenen Kantenbeschriftungen und die zugewiesenen Knotenbeschriftungen darstellen.

2. Das computerimplementierte Verfahren (400) nach Anspruch 1, wobei die Kostenfunktion die Ähnlichkeit zwischen jeweiligen Dreiecken als Funktion von Winkeln, die die Dreiecke definieren, ausdrückt.

3. Das computerimplementierte Verfahren (400) nach Anspruch 2, das weiter das Bestimmen der Ähnlichkeit als Funktion der Winkel, die die Dreiecke definieren, durch Projizieren der Winkel eines jeweiligen Dreiecks als 3D-Koordinate auf einen 2D-Simplex und durch Berechnen eines Abstands zwischen projizierten Koordinaten der Dreiecke auf dem 2D-Simplex umfasst.

4. Das computerimplementierte Verfahren (400) nach einem der Ansprüche 1 bis 3, wobei der erste lokale Suchalgorithmus ein additiver Kantenkontraktions-Algorithmus nach Greedy ist.

5. Das computerimplementierte Verfahren (400) nach einem der Ansprüche 1 bis 4, wobei der zweite lokale Suchalgorithmus ein Kernighan-Lin-Algorithmus ist.

6. Das computerimplementierte Verfahren (400) nach einem der Ansprüche 1 bis 5, wobei die geometrischen Vorlagendaten Vorlagenpunkte umfassen, die eine zusammengesetzte geometrische Vorlage mehrerer Objekte darstellen, wobei die Vorlagenpunkte beschriftet sind, um jeweilige Teile jeweiliger der mehreren Objekte zu unterscheiden.

7. Das computerimplementierte Verfahren (400) nach einem der Ansprüche 1 bis 6, das weiter das Zugreifen auf Sensordaten, die von einem Sensor erfasst wurden, und das Erzeugen der Eingabepunkte durch Extrahieren von Punkten von Interesse aus den Sensordaten umfasst.

8. Das computerimplementierte Verfahren (400) nach Anspruch 7, wobei die Sensordaten Bilddaten sind, die von einer Kamera erfasst werden, und das Verfahren das Erzeugen der Eingabepunkte durch Extrahieren der Punkte von Interesse als Schlüsselpunkte aus den Bilddaten umfasst.

9. Das computerimplementierte Verfahren (400) nach Anspruch 8, wobei die Bilddaten 2D-Bilddaten sind und das Verfahren das Erzeugen der Eingabepunkte durch Extrahieren der Schlüsselpunkte aus den 2D-Bilddaten und Rückprojizieren der extrahierten Schlüsselpunkte in ein 3D-Koordinatensystem auf Basis von Tiefeninformationen für die 2D-Bilddaten umfasst.

10. Das computerimplementierte Verfahren (400) nach einem der Ansprüche 1 bis 9, wobei die Vorlagenpunkte durch zusammenhängendes Indexieren der Vorlagenpunkte innerhalb des Koordinatensystems beschriftet werden.

11. Ein computerlesbares Medium (500), das flüchtige oder nichtflüchtige Daten (510) umfasst, die Anweisungen darstellen, die so eingerichtet sind, dass sie ein Prozessorsystem dazu bringen, das computerimplementierte Verfahren nach einem der Ansprüche 1 bis 10 durchzuführen.

12. Ein System (100) zur Objekterkennung, umfassend:

- eine Eingabeschnittstelle (180), die so konfiguriert ist, dass sie:

auf Vorlagendaten (192) zugreift, die Vorlagenpunkte umfassen, die als Koordinaten in einem Koordinatensystem definiert sind, wobei die Vorlagenpunkte eine geometrische Vorlage eines Objekts darstellen, wobei die Vorlagenpunkte beschriftet sind, um jeweilige Teile des Objekts zu unterscheiden;
auf Eingabedaten (194) für die Objekterkennung zugreift, wobei die Eingabedaten Eingabepunkte umfassen, die als Koordinaten im Koordinatensystem definiert sind;

- ein Prozessor-Subsystem (160), das so konfiguriert ist, dass es

einen ungerichteten gewichteten Graphen konstruiert, der Knoten, die die Eingabepunkte darstellen, und Kanten zwischen den Knoten aufweist;
Objekterkennung durch Finden eines oder mehrerer Vorkommen oder teilweiser Vorkommen des Objekts in den Eingabedaten durchführt, auf Basis von:

- Zuweisen von Kantenbeschriftungen zu den Kanten, um Schnitte im Graphen zu definieren, um eine Zerlegung in einen oder mehrere Cluster zu erhalten, die Objekte darstellen, und
- Zuweisen von Knotenbeschriftungen aus einem Satz Beschriftungen zu den Knoten, um einen jeweiligen Knoten als einen jeweiligen Teil eines jeweiligen Objekts darstellend zu identifizieren,

wobei die Kanten- und Knotenbeschriftung umfasst:

- Bereitstellen einer Kostenfunktion, die eine skaleninvariante Ähnlichkeit zwischen einem jeweiligen Dreieck in den Knoten und einem jeweiligen Dreieck in den Vorlagenpunkten ausdrückt, wobei die skaleninvariante Ähnlichkeit zur Kostenfunktion beiträgt, wenn die Beschriftung der Knoten mit der Beschriftung der Vorlagenpunkte übereinstimmt und die Knoten Teil desselben Clusters sind;
- Anwenden eines ersten lokalen Suchalgorithmus auf einen anfänglichen Graphen, der jeden Knoten unbeschriftet und jede Kante beschriftet aufweist, um einen Schnitt zu definieren, wobei der erste lokale Suchalgorithmus so konfiguriert ist, dass er durch iteratives Verbinden von Knoten durch Kantenbeschriftung, um Cluster im Graphen zu bilden, und durch iterative Beschriftung von Knoten, wodurch eine anfängliche Kanten- und Knotenbeschriftung erhalten wird, nach einem anfänglichen lokalen Minimum der Kostenfunktion sucht;
- Anwenden eines zweiten lokalen Suchalgorithmus auf die anfängliche Kanten- und Knotenbeschriftung, wobei der zweite lokale Suchalgorithmus so konfiguriert ist, dass er durch iteratives Verschieben von Knoten zwischen Clustern durch Umbeschriftung von Kanten und durch Umbeschriftung von Knoten nach einer Verbesserung des anfänglichen lokalen Minimums der Kostenfunktion sucht;

- eine Ausgabeschnittstelle (180) zum Ausgeben von Objekterkennungsdaten (196), wobei die Objekterkennungsdaten die zugewiesenen Kantenbeschriftungen und die zugewiesenen Knotenbeschriftungen darstellen.

13. Das System (100) nach Anspruch 12, das weiter eine Sensorschnittstelle (120) zum Zugreifen auf Sensordaten (122), die von einem Sensor (20) erfasst werden, umfasst, wobei das Prozessor-Subsystem (160) so konfiguriert ist, dass es die Eingabepunkte durch Extrahieren von Punkten von Interesse aus den Sensordaten erzeugt.

14. Das System (100) nach Anspruch 12 oder 13, das weiter eine Betätigungsvorrichtungsschnittstelle (140) zum Bereitstellen von Steuerdaten (142) für eine Betätigungsvorrichtung (40) umfasst, wobei das Prozessor-Subsystem (160) so konfiguriert ist, dass es die Steuerdaten, um die Betätigungsvorrichtung zu steuern, auf Basis der Objekterkennungsdaten erzeugt.

15. Ein Fahrzeug (80) oder Roboter, das/der das System (100) nach einem der Ansprüche 12 bis 13 umfasst.

**Revendications**

1. Un procédé mis en œuvre par ordinateur (400) pour la reconnaissance d'objet, comprenant :

- l'accès (410) à des données de modèle comprenant des points de modèle définis comme des coordonnées dans un système de coordonnées, dans lequel les points de modèle représentent un modèle géométrique d'un objet, dans lequel les points de modèle sont étiquetés pour distinguer des parties respectives de l'objet ;
- l'accès (420) à des données d'entrée pour la reconnaissance d'objet, les données d'entrée comprenant des points d'entrée (200) définis comme des coordonnées dans le système de coordonnées ;
- la construction d'un graphe pondéré non orienté présentant des nœuds représentant les points d'entrée et des arêtes entre les nœuds ;
- la réalisation de la reconnaissance d'objet en trouvant une ou plusieurs occurrences ou occurrences partielles de l'objet (210) dans les données d'entrée sur la base de :

- l'attribution d'étiquettes d'arête aux arêtes pour définir des coupures dans le graphe afin d'obtenir une décomposition en un ou plusieurs groupes représentant des objets, et
- l'attribution d'étiquettes de nœud à partir d'un ensemble d'étiquettes aux nœuds afin d'identifier un nœud respectif comme représentant une partie respective d'un objet respectif,

dans lequel ledit étiquetage d'arête et de nœud comprend :

- la fourniture (430) d'une fonction de coût exprimant une similarité invariante à l'échelle entre un triangle respectif dans les nœuds et un triangle respectif dans les points de modèle, dans lequel la similarité invariante à l'échelle contribue à la fonction de coût si l'étiquetage des nœuds correspond à l'étiquetage des points de modèle et si les nœuds font partie d'un même groupe ;
- l'application (440) d'un premier algorithme de recherche locale à un graphe initial présentant chaque nœud non étiqueté et chaque arête étiquetée afin de définir une coupure, dans lequel le premier algorithme de recherche locale est configuré pour rechercher un minimum local initial dans la fonction de coût en connectant de manière itérative les nœuds par étiquetage d'arête afin de former des groupes dans le graphe et en étiquetant de manière itérative les nœuds, obtenant ainsi un étiquetage d'arête et de nœud initial ;
- l'application (450) d'un second algorithme de recherche locale à l'étiquetage d'arête et de nœud initial, dans lequel le second algorithme de recherche locale est configuré pour rechercher une amélioration du minimum local initial de la fonction de coût en déplaçant de manière itérative des nœuds entre des groupes par réétiquetage d'arête et par réétiquetage de nœud ;

- la génération (460) de données de reconnaissance d'objet en tant que sortie, les données de reconnaissance d'objet représentant lesdites étiquettes d'arête attribuées et lesdites étiquettes de nœud attribuées.

2. Le procédé mis en œuvre par ordinateur (400) selon la revendication 1, dans lequel la fonction de coût exprime la similarité entre des triangles respectifs en tant que fonction d'angles définissant les triangles.

3. Le procédé mis en œuvre par ordinateur (400) selon la revendication 2, comprenant en outre la détermination de la similarité en fonction des angles définissant les triangles en projetant les angles d'un triangle respectif sous forme de coordonnées 3D sur un simplexe 2D et en calculant une distance entre les coordonnées projetées des triangles sur le simplexe 2D.

4. Le procédé mis en œuvre par ordinateur (400) selon l'une quelconque des revendications 1 à 3, dans lequel le premier algorithme de recherche locale est un algorithme de contraction d'arêtes additive gloutonne.

5. Le procédé mis en œuvre par ordinateur (400) selon l'une quelconque des revendications 1 à 4, dans lequel le second algorithme de recherche locale est un algorithme de Kernighan-Lin.

6. Le procédé mis en œuvre par ordinateur (400) selon l'une quelconque des revendications 1 à 5, dans lequel les données de modèle géométrique comprennent des points de modèle représentant un modèle géométrique composé de multiples objets, dans lequel les points de modèle sont étiquetés pour distinguer des parties respectives d'objets respectifs parmi les multiples objets.

7. Le procédé mis en œuvre par ordinateur (400) selon l'une quelconque des revendications 1 à 6, comprenant en outre l'accès à des données de capteur acquises par un capteur et la génération des points d'entrée en extrayant des points d'intérêt à partir des données de capteur.

8. Le procédé mis en œuvre par ordinateur (400) selon la revendication 7, dans lequel les données de capteur sont des données d'image acquises par une caméra et le procédé comprend la génération des points d'entrée en extrayant les points d'intérêt en tant que points clés à partir des données d'image.

9. Le procédé mis en œuvre par ordinateur (400) selon la revendication 8, dans lequel les données d'image sont des données d'image 2D et le procédé comprend la génération des points d'entrée en extrayant les points clés des données d'image 2D et en rétroprojetant lesdits points clés extraits dans un système de coordonnées 3D sur la base d'informations de profondeur pour les données d'image 2D.

10. Le procédé mis en œuvre par ordinateur (400) selon l'une quelconque des revendications 1 à 9, dans lequel les points de modèle sont étiquetés par indexation contiguë des points de modèle dans le système de coordonnées.

11. Un support lisible par ordinateur (500) comprenant des données transitoires ou non transitoires (510) représentant des instructions agencées pour amener un système de processeur à effectuer le procédé mis en œuvre par ordinateur selon l'une quelconque des revendications 1 à 10.

12. Un système (100) de reconnaissance d'objet, comprenant :

- une interface d'entrée (180) configurée pour :

accéder à des données de modèle (192) comprenant des points de modèle définis comme des coordonnées dans un système de coordonnées, dans lequel les points de modèle représentent un modèle géométrique d'un objet, dans lequel les points de modèle sont étiquetés pour distinguer des parties respectives de l'objet ; accéder à des données d'entrée (194) pour la reconnaissance d'objet, les données d'entrée comprenant des points d'entrée définis comme des coordonnées dans le système de coordonnées ;

- un sous-système de processeur (160) configuré pour :

construire un graphe pondéré non orienté présentant des nœuds représentant les points d'entrée et des arêtes entre les nœuds ; réaliser la reconnaissance d'objet en trouvant une ou plusieurs occurrences ou occurrences partielles de l'objet dans les données d'entrée sur la base de :

- l'attribution d'étiquettes d'arête aux arêtes pour définir des coupures dans le graphe afin d'obtenir une décomposition en un ou plusieurs groupes représentant des objets, et
- l'attribution d'étiquettes de nœud à partir d'un ensemble d'étiquettes aux nœuds afin d'identifier un nœud respectif comme représentant une partie respective d'un objet respectif,

dans lequel ledit étiquetage d'arête et de nœud comprend :

- la fourniture d'une fonction de coût exprimant une similarité invariante à l'échelle entre un triangle respectif dans les nœuds et un triangle respectif dans les points de modèle, dans lequel la similarité invariante à l'échelle contribue à la fonction de coût si l'étiquetage des nœuds correspond à l'étiquetage des points de modèle et si les nœuds font partie d'un même groupe ;
- l'application d'un premier algorithme de recherche locale à un graphe initial présentant chaque nœud non étiqueté et chaque arête étiquetée afin de définir une coupure, dans lequel le premier algorithme de recherche locale est configuré pour rechercher un minimum local initial dans la fonction de coût en connectant de manière itérative les nœuds par étiquetage d'arête afin de former des groupes dans le graphe et en étiquetant de manière itérative les nœuds, obtenant ainsi un étiquetage d'arête et de nœud initial ;
- l'application d'un second algorithme de recherche locale à l'étiquetage d'arête et de nœud initial, dans lequel le second algorithme de recherche locale est configuré pour rechercher une amélioration du minimum local initial de la fonction de coût en déplaçant de manière itérative des nœuds entre des groupes par réétiquetage d'arête et par réétiquetage de nœud ;

- une interface de sortie (180) pour délivrer en sortie des données de reconnaissance d'objet (196), les données de reconnaissance d'objet représentant lesdites étiquettes d'arête attribuées et lesdites étiquettes de nœud attribuées.

13. Le système (100) selon la revendication 12, comprenant en outre une interface de capteur (120) pour accéder à des données de capteur (122) acquises par un capteur (20), dans lequel le sous-système de processeur (160) est configuré pour générer les points d'entrée en extrayant des points d'intérêt des données de capteur.

**14.** Le système (100) selon la revendication 12 ou 13, comprenant en outre une interface d'actionneur (140) pour fournir des données de commande (142) à un actionneur (40), dans lequel le sous-système de processeur (160) est configuré pour générer les données de commande pour commander l'actionneur sur la base des données de reconnaissance d'objet.

**15.** Un véhicule (80) ou robot comprenant le système (100) selon l'une quelconque des revendications 12 à 13.

Fig. 1

Fig. 2

Fig. 3A

Fig. 3B

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEVINKOV, EVGENY** ; **KIRILLOV, ALEXANDER** ; **ANDRES, BJOERN**. *A Comparative Study of Local Search Algorithms for Correlation Clustering*, 2017, 103-114